# EUROPEAN PATENT APPLICATION

(11) **EP 3 202 863 A1**
(43) Date of publication of application: **09.08.2017**
(21) Application number: 16173243.3
(22) Date of filing: 07.06.2016
(51) Int. Cl.: C09D 11/10, C09D 11/326, C09D 11/328, C09B 69/10, D06P 5/30

(54) **AQUEOUS INKJET INK COMPOSITION**

(30) Priority: 05.02.2016 TW 105103968
(71) Applicant: JETBEST Corporation, Hsinchu City (TW)
(72) Inventor: Lu, Yi-Ching, Hsinchu City (TW); Wu, Iuan-Yuan, Hsinchu City (TW)
(74) Representative: Gee, Steven William

(57) **Abstract**

An aqueous inkjet ink composition is disclosed and includes a dye based polymeric dispersant, an aqueous organic solvent, at least one additive and water for application of inkjet printing specific patterns on various texture products. The dye based polymeric dispersant is present in an amount of from 2 to 30 percent by weight of the total weight of the inkjet ink composition, the aqueous organic solvent is 15 to 65 percent by weigh, and the at least one additive less than 2 percent by weigh. The dye based polymeric dispersant, the aqueous organic solvent and the at least one additive are dissolved or dispersed in water like distilled or de-ionized water. The present invention has features of good stability and not easily clogging at printerhead nozzles without a great deal of industrial waste water and a tedious and complex post treatment of water cleaning, thereby scaling down the manufacturing apparatus for digital fabric and increasing its popularity.

## Description

### CROSS-REFERENCE TO RELATED APPLICATION

The present application is based on, and claims priority form, Taiwan Patent Application No. 105103968, filed February 5, 2016, the disclosure of which is hereby incorporated by reference herein in its entirety.

### TECHNICAL FIELD

The present invention generally relates to an inkjet ink composition, and more specifically to an aqueous inkjet ink composition containing specific polymer as chromophore to exhibit good color rendering and strengthen adhesion for directly inkjet printing on paper as well as cloth of cotton, linen, silk, wool, polyester, nylon, rayon, and so forth, so as to form vivid and colorful patterns compared to dye ink after simple heating/drying without excessive soap/water cleaning, such that the subsequent heating/drying process is simple without a great deal of industrial waste water and a tedious and complex treatment of water cleaning, and the inkjet ink of the present invention is really applied to implement the object of scaling down the manufacturing apparatus for digital fabric and increasing its popularity.

### BACKGROUND

Generally, the fundamentals of digital printing are similar to those of the traditional inkjet printer. The original skill of inkjet printing can be tracked back to 1884. In 1960, inkjet printing had become mature and industrial practical. During 90's at last century, computers had been successfully popularized to the market, and then digital inkjet printing machines had been developed to market in 1995. At present, the field of digital printing is still spotlighted, and vivid patterns with various colors are fast and truly displayed on a variety of textile material. Thus, the invention of inkjet printer greatly helps people become masters for design of textile products.

In addition, compared to traditional printing machines, digital printers take smaller space like only about 1/20, has less efflux of carbon dioxide like about 20∼60%, and generates more colors like 167,000. Besides, halftone in screen print is no more needed, and particularly, the advantages of immediately modifying draft patterns, small scale production, instant delivery to the customer and less manpower are achieved. As a result, digital printing has become more popular, especially for the textile printing manufacturers and clothes designer.

As the progress of the technique in the digital printing, digital printing ink becomes more advanced and a wide variety of digital printing ink have been developed such as dispersive dye inkjet ink (containing sublimation ink), reactive dye inkjet ink, acidic dye inkjet ink and aqueous pigment inkjet ink. In general, dispersive dye inkjet ink needs thermal post-treatment to exhibit vivid color and is only applicable to polyester fiber. For reactive dye inkjet ink, vivid colors are exhibited on cloth of cotton, linen, silk and wool through the complex pre-treatment and post-treatment, which produce a great deal of waste water. The feature of acidic dye inkjet ink is that the pre-treatment and the post-treatment are still needed and a great deal of waste water is also produced. The color is vivid, but strength of adhesion for color is weak. As a result, acidic dye inkjet ink is applicable to silk, wool and nylon. As for aqueous pigment inkjet ink, only a treatment of heating/drying is required, and can be applicable to most textile like cotton, linen, silk, wool, polyester, nylon and rayon. However, its color performance is poor and another shortcoming is that the printerhead is easily clogged by the ink. Thus, an ideal inkjet ink should exhibit vivid performance for color and is applicable to most textile material without efflux of large mount of waste water in the subsequent post-treatment.

Therefore, it is greatly needed to provide a new inkjet ink composition with aqueous dye based polymeric, which comprises a dye based polymeric dispersant, an aqueous organic solvent, at least one additive and water. By a means of organic synthesis, a dye polymer is formed of a polymer with electrophilic functional group and a dye with nucleophilic functional group through the addition reaction. During polymerization of isocyanate and polyol to form polyurethane, various active dyes can be appropriately added to generate different types of polyurethane. Thus, the dye with polymeric chain possesses dispersion adjustable to the polymer to enhance color rendering. The molecular weight of the dye increases due to addition of the polymer such that adhesion strength like Van Der Waals force and hydrogen bonding between the dye and the textile fiber is indirectly strengthened. The dye has stronger color adhesion. Besides, the polymeric dye is applicable to digital inkjet ink by emulsion and dispersion, thereby overcoming the above problems in the prior arts.

### SUMMARY

The primary object of the present invention is to provide an aqueous inkjet ink composition comprising a dye based polymeric dispersant, an aqueous organic solvent, at least one additive and water for the application field of inkjet printing like inkjet printer. The inkjet ink of the present invention is provided on textile material to form specific color patterns through an inkjet process, and after the original patterns are heated and dried, excellent color brightness and vividness are exhibited as the dye ink. In particular, the dye based polymeric dispersant is present in an amount of from 2 to 30 percent by weight of the total weight of the inkjet ink composition, the aqueous organic solvent is 15 to 65 percent by weigh, and the at least one additive less than 2 percent by weigh. The above water like distilled or de-ionized water is intended for diluting or dispersing the dye based polymeric dispersant, the aqueous organic solvent and the at least one additive.

The dye based polymeric dispersant is specifically formed of a dye with mono or multiple color and organic monomer or oligomer through polymerization and subsequent process of dispersion/emulsion. The body of the dye based polymer (or polymeric dye) is the polymer or copolymer of polyester, nylon, epoxy resin and acrylic. More specifically, the dye based polymeric dispersant comprises at least one dye polymer and an emulsifier, wherein the dye polymer is present in an amount of from 1 to 20 percent by weight of the total weight of the aqueous inkjet ink composition. Further, the above dye polymer comprises at least one of polyurethane, polyimide, epoxy resin, polyester, acrylic, phenolic, polyether and melamine.

In addition, the aqueous organic solvent comprises at least one of monool solvent, diol solvent, glycerol solvent, erythritol solvent, pentitol solvent, mannitol solvent, glycol sugar solvent, glycol ether solvent, pyrrolidone solvent and sulfoxide solvent.

Further, the monool solvent comprises at least one of alcohol, n-propanol and iso-propanol, the diol solvent comprises at least one of glycol, propanediol, butanediol, pentanediol, hexanediol, diethylene glycol, dipropylene glycol, triethylene glycol and tripropylene glycol, the glycol ether solvent comprises at least one of ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, triethylene glycol monomethyl ether, triethylene glycol monoethyl ether, tetraethylene glycol monomethyl ether, propylene glycol monomethyl ether, propylene glycol monopropyl ether, propylene glycol monobutyl ether, propylene glycol mono-isobutyl ether, dipropylene glycol monomethyl ether, dipropylene glycol monoethyl ether, dipropylene glycol monobutyl ether, dipropylene glycol mono-isobutyl ether, dipropylene glycol monopropyl ether and tripropylene glycol monomethyl ether. The pyrrolidone solvent comprises at least one of 2-pyrrolidone and N-methyl pyrrolidone, and the sulfoxide solvent comprises dimethyl sulfoxide.

The above at least one additive may comprise at least one of fungicide, thickener, surfactant, antifoamer, pH conditioning agent and chelating agent. Further, the thickener comprises at least one of celluloses and synthesis polymer. The celluloses may comprise methyl cellulose, and the synthesis polymer comprises at least one of sodium polyacrylate, polyvinyl alcohol, polyvinylpyrrolidone, polyacrylamide, polyurethane, polyoxyethylene, polyacrylic acid and polyacrylate. The surfactant comprises at least one of silicon ketones, silicon alkanes and acetylenic diol, the pH conditioning agent comprises triethanolamine, and the chelating agent comprises ethylene diamine tetraacetic acid (EDTA).

The aqueous inkjet ink composition of the present invention is stable and does not easily clog at the printerhead, especially having the specific polymeric dye as chromophore, and possessing good color rendering. Also, color adhesion is greatly enhanced. As a result, the inkjet ink is applicable to the inkjet printer for directly printing, and the acquired patterns are further heated and dried without additional process of soap and water cleaning such that excellent color brightness and vividness are exhibited as the dye ink. The application of the present invention is thus broad. For example, the inkjet ink is directly printed on most textile material such as cloth of cotton, linen, silk, wool, polyester, nylon and rayon, in addition to normal paper. Particularly, the subsequent process of heating/drying is simple, and it is no need for tedious and complex water treatment without generating a great deal of waste water. It is obvious that the inkjet ink of the present invention really implements the object of scaling down the manufacturing apparatus for digital fabric and increasing its popularity.

### BRIEF DESCRIPTION OF THE EMBODIMENTS

The present invention is further understood by referring to the following embodiments. The following embodiment is only preferred embodiments and can not used to limit the claimed range of the present invention.

The aqueous inkjet ink composition of the present invention comprises a dye based polymeric dispersant, an aqueous organic solvent, at least one additive and water. The water is uses as a solvent and may comprise distilled or de-ionized water for dissolving or dispersing the dye based polymeric dispersant, the aqueous organic solvent and the at least one additive. The dye based polymeric dispersant is present in an amount of from 2 to 30 percent by weight of the total weight of the inkjet ink composition, the aqueous organic solvent is 15 to 65 percent by weigh, and the at least one additive less than 2 percent by weight.

Further, the dye based polymeric dispersant is specifically formed of a dye with mono or multiple color and organic monomer or oligomer like the polymer or copolymer of polyester, nylon, epoxy resin and acrylic through polymerization and the subsequent process of dispersion/emulsion.

Specifically, the dye based polymeric dispersant comprises at least one dye polymer and an emulsifier. The at least one dye polymer is present in an amount of from 1 to 20 percent by weight of the total weight of the aqueous inkjet ink composition, and comprises nucleophilic dye chromophore or electrophilic substituent dye chromophore (so called reactive dye), which is involved in polymerization for organic monomer or oligomer with addition to the main or branch chain. For classification, the above dye polymer generally comprises at least one of polyurethane, polyimide, epoxy resin, polyester, acrylic, phenolic, polyether and melamine. In particular, the dye based polymeric dispersant is acquired after the polymer is purified and processed by dispersion and emulsion, or alternatively, by adding dispersion agent and water after polymerization. The dye polymer has a particle size (D50) less than 500 nm, preferably less than 200nm. For color rendering of the dye polymer and brightness and vividness of the patterns after printed, the particle size (D50) should be less than 100 nm.

As for the dye polymer of polyurethane, a process of copolymerization of a reactive dye, isocyanate and a diol or polyol is performed in a specific order of addition to generate various dye polymers with different structures of strength, specified by a chemical reaction equation 1 below, 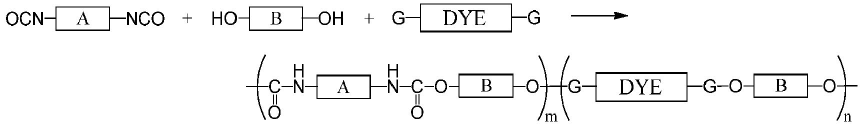 , where 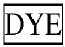 is chromophore group for the reactive dye, each of 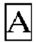 and 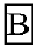 is alkyl group or aryl group, and G is vinyl sulfone group or chlorotriazine group.

The dye polymer formed of polyimide is obtained through an addition reaction of a dye with hydroxyl group or a reactive dye containing amino group, and a pre-polymer or oligomer containing diisocyanate specified by a chemical reaction equation 2 as below, 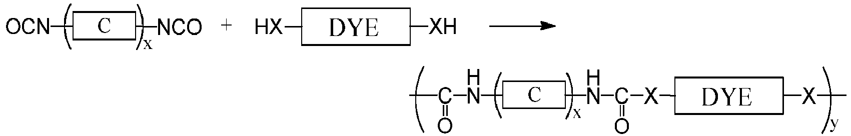 , wherein 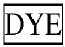 is chromophore group, 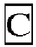 is a repeat unit of diisocyanate pre-polymer, and X is O (oxygen) or NH (nitro-hydrogen group).

The dye polymer formed of epoxy resin is obtained through a reaction process of a dye with hydroxyl group (OH) or a reactive dye containing amino group (NH2), and a pre-polymer or oligomer of epoxy resin specified by a chemical reaction equation 3 as below, 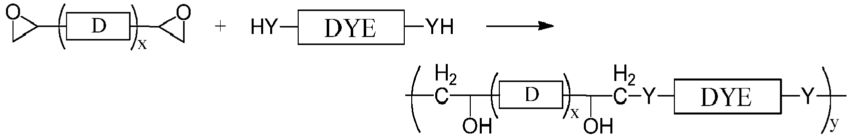 , wherein 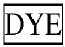 is chromophore group, 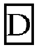 is a repeat unit of a pre-polymer or oligomer of epoxy resin, and Y is O (oxygen) or NH (nitro-hydrogen group).

The dye polymer formed of polyimide is obtained through a reaction of copolymerization of a reactive dye, di-acid and di-amine specified by a chemical reaction equation as below, 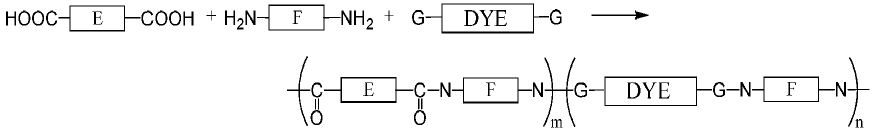 , wherein 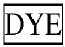 is chromophore group, each of 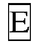 and 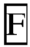 is alkyl group or aryl group, and 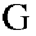 is vinyl sulfone group or chlorotriazine group.

The dye polymer formed of polyester is obtained through a reaction of copolymerization of a reactive dye, di-acid and diol specified by a chemical reaction equation 4 as below, 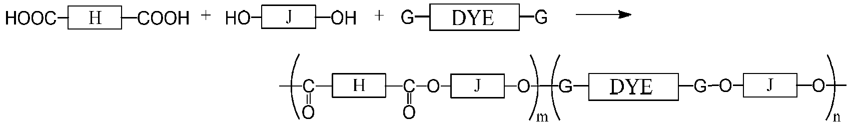 , wherein 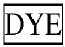 is chromophore group, each of 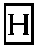 and 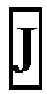 is alkyl group or aryl group, and G is vinyl sulfone group or chlorotriazine group.

The dye polymer formed of polyester is obtained through an addition reaction of a dye containing hydroxyl group or amino group, and pre-polymer or oligomer containing di-acid specified by a chemical reaction equation 5 as below, 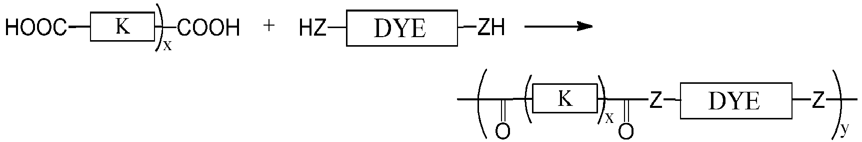 , wherein 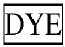 is chromophore group, 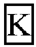 is a repeat unit of pre-polymer of di-acid, and Z is O (oxygen) or NH (nitro-hydrogen group).

The dye polymer formed of acrylic is obtained by first synthesizing a reactive dye having vinyl-based chromophore through diazotization, and then copolymerization with acrylic specified by a chemical reaction equation 6 as below, 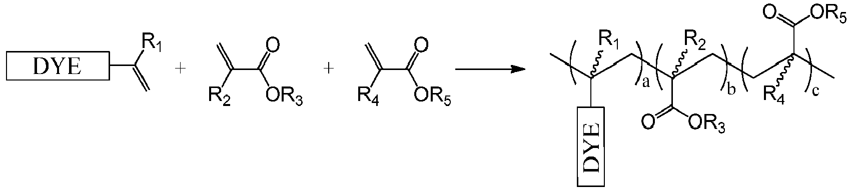 , wherein 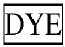 is chromophore group, and each of R1-R5 is hydrogen (H) or alkyl group.

As well known, the chromophore is the part of a molecule responsible for its color. The color arises when a molecule absorbs certain wavelengths of visible light and transmits or reflects others. The chromophore is a region in the molecule where the energy difference between two different molecular orbitals falls within the range of the visible spectrum. Visible light that irradiates the chromophore can thus be absorbed by exciting an electron from its ground state into an excited state. For example, one end of the unsaturated, conjugated bond (like -C=C-, -C≡C- or N=N-) of the chromophore of the dye molecule contains electron-donor group (like -OH or -NH₂), and the other end of the unsaturated, conjugated bond contains electron-acceptor group (like -NO₂ or > C=O) such that the dye molecule is polarized after the electrons absorb light with a specific range of wavelength, and the excited electrons are caused to jump/bounce between different energy levels. As a result, different colors are generated and emitted.

In general, the longer the conjugated chain in the dye molecule, the deeper the color. The stronger the electron-donor group's capability of expelling electron or the stronger the electron-acceptor group's capability of attracting electron, the longer the absorption wavelength and the longer the wavelength of emitting light.

The process manufacturing the reactive dye for the dye polymer is described in details hereinafter.

The first kind of manufacturing the reactive dye comprises the following steps. The vinyl sulfone dye, chlorotriazine dye and dichlorotriazine dye, or double vinyl sulfone dye, double chlorotriazine dye and double dichlorotriazine dye are used, and each one has different chemical activity, depending on its functional group, such as reactive yellow 17, 37, 81, 84, 85, 86, 135, 145, 160, 176 and 202, reactive red 2, 120, 141, 180, 195, 198, 231, 241 and 250, reactive blue 2, 4, 15, 16, 19, 28, 49, 81, 109, 150, 171, 198, 222 and 225, reactive orange 5, 7, 13, 16, 72, 84, 86, 91, 122 and 125, reactive green 5, 8 and 19, reactive black 5, 8, 31, 39 and 42, and so on. The reactive dye with mono active group is suitable for the polymer with nucleophilic side chain or branch, and the reactive dye with double active group involves in polymerization as the above equations 1 and 4.

The second kind of manufacturing the reactive dye comprises the addition reaction of the dye containing nucleophilic group (amino or hydroxyl) with electrophilic monomer, pre-polymer or oligomer, as the above equations 2, 3 and 5.

The third kind of manufacturing the reactive dye comprises the free radical polymerization of the dye containing vinyl group with monomer or oligomer containing other vinyl group, as the following chemical reaction equations 7, 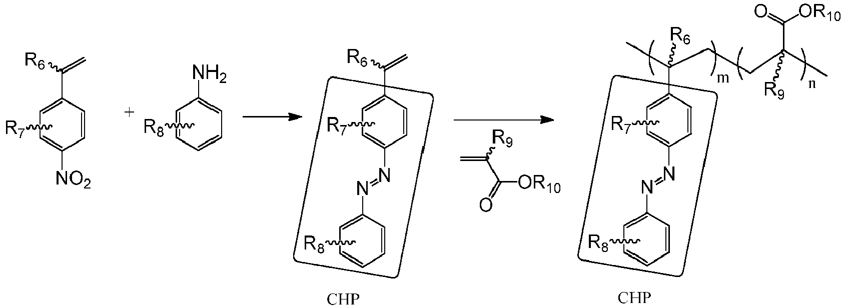 , wherein each of R6, R9 and R10 is hydrogen (H) or alkyl group, each of R7 and R8 is hydrogen (H), alkyl group or alkyl derivative, and CHP is chromophore group.

The above ink composition of the present invention employs water as the primary solvent for controlling the boiling point of the ink, and for consideration of moisture of the printerhead and fluidity of the ink, aqueous organic solvent is added. The organic solvent used comprises at least one of monool solvent, diol solvent, glycerol solvent, erythritol solvent, pentitol solvent, mannitol solvent, glycol sugar solvent, glycol ether solvent, pyrrolidone solvent and sulfoxide solvent, which is completely solvable in water.

Further, the monool solvent comprises at least one of alcohol, n-propanol and iso-propanol, the diol solvent comprises at least one of glycol, propanediol, butanediol, pentanediol, hexanediol, diethylene glycol, dipropylene glycol, triethylene glycol and tripropylene glycol, the glycol ether solvent comprises at least one of ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, triethylene glycol monomethyl ether, triethylene glycol monoethyl ether, tetraethylene glycol monomethyl ether, propylene glycol monomethyl ether, propylene glycol monopropyl ether, propylene glycol monobutyl ether, propylene glycol mono-isobutyl ether, dipropylene glycol monomethyl ether, dipropylene glycol monoethyl ether, dipropylene glycol monobutyl ether, dipropylene glycol mono-isobutyl ether, dipropylene glycol monopropyl ether and tripropylene glycol monomethyl ether. The pyrrolidone solvent comprises at least one of 2-pyrrolidone and N-methyl pyrrolidone, and the sulfoxide solvent comprises dimethyl sulfoxide.

In addition, the additive of the present invention may comprise at least one of fungicide, thickener, surfactant, antifoam, pH conditioning agent and chelating agent. The fungicide is intended for retarding fungi from budding or growing in the ink so as to prolong storage time. The thickener increases viscosity of the ink without affecting stability. Also, the surfactant reduces surface tension of the ink and enhances its osmosis.

Specifically, the above thickener comprises at least one of celluloses and synthesis polymer, wherein the celluloses may comprise at least one of methyl cellulose, and the synthesis polymer comprises at least one of sodium polyacrylate, polyvinyl alcohol, polyvinylpyrrolidone, polyacrylamide, polyurethane, polyoxyethylene, polyacrylic acid and polyacrylate. The surfactant comprises at least one of silicon ketones, silicon alkanes and acetylenic diol, the pH conditioning agent comprises triethanolamine, and the chelating agent comprises ethylene diamine tetraacetic acid (EDTA).

To further understand the aspects of the present invention, please refer to the illustrative examples about the manufacturing process in the following description. However, it should be noted that the examples are only exemplary and not intended to limit the scope of the present invention.

The dye based polymeric dispersant is prepared hereinafter.

First, polytetramethylene glycol (PTMG) after vacuum drying is dissolved in a little amount of NMP, and then pulled into a 500 mL 4-neck round-bottom flask provided with a mechanical stirrer, a condenser, a thermometer and a feeding funnel. Under nitrogen atmosphere and 60°C, an acetone solution with isophorone diisocyanate (IPDI) is added and the mixture is stirred for 15 minutes, and then an acetone solution with 2,2-bis(hydroxymethyl) propionic acid (DMPA) is added and stirred for 15 minutes. Next, the mixture is added by dibutyltin dilaurate (DBTDL) as a catalyst, heated up to 70°C, and stirred for 120 minutes. Aceton is added for dilution, and triethylamine (TEA) is added for neutralization, thereby obtaining aqueous pre-polyurethane. The pre-polyurethane is reacted with N-(2-hydroxyethyl) ethylenediamine (HEDA) at room temperature for 60 minutes to obtain polyurethane 1 with hydroxyl side group as shown below,

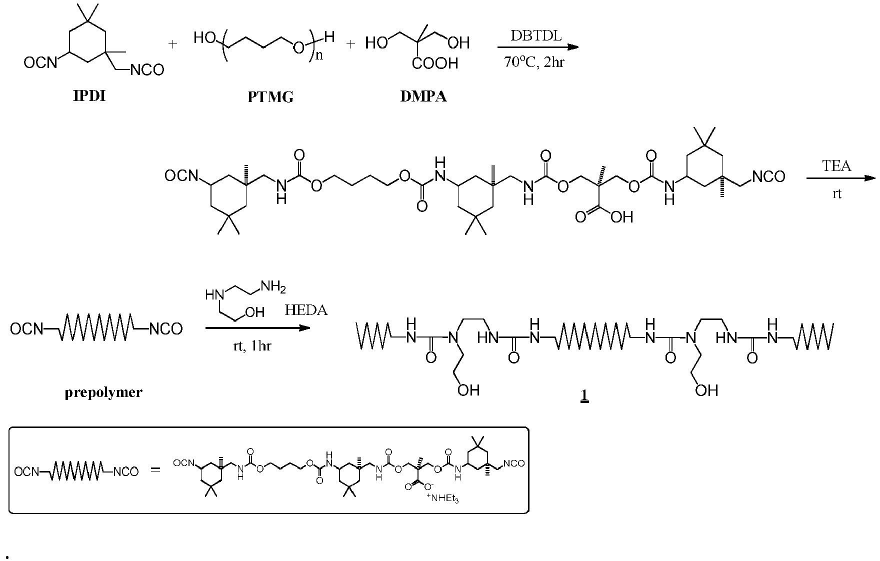

The above polyurethane 1 with hydroxyl side group is reacted with the vinyl sulfone group of reactive dye (reactive yellow 145) to form a new covalent bond at 50°C and pH = 9 so as to obtain the dyestuff polyurethane 2 as shown below. The dyestuff polyurethane 2 is diluted by appropriate amount of acetone and then added by an emulsion solution at high-speed stirring. After 60 minutes of stirring for well mixing, acetone is removed through a process of reduced pressure distillation. As a result, an aqueous emulsion of the yellow dyestuff polyurethane with a solid content of 26.5%, a particle size of 75 nm and viscosity of 10 cps is obtained.

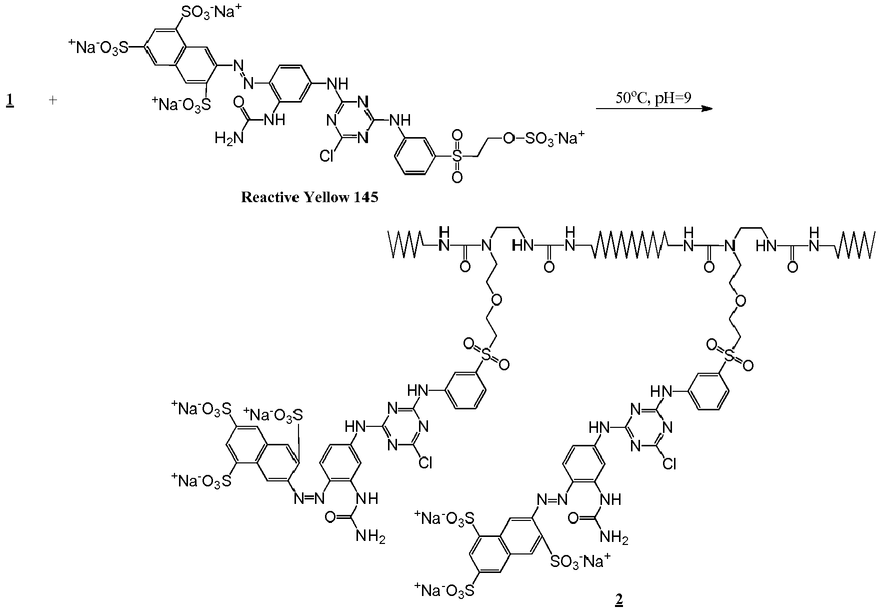

In addition, the above polyurethane 1 with hydroxyl side group is reacted with the vinyl sulfone group of reactive dye (reactive red 195) to form a new covalent bond at 50°C and pH = 9 so as to obtain the dyestuff polyurethane 3 as shown below. The dyestuff polyurethane 3 is diluted by appropriate amount of acetone and then added by an emulsion solution at high-speed stirring. After 60 minutes of stirring, acetone is removed through a process of reduced pressure distillation, and an aqueous emulsion of the magenta dyestuff polyurethane with a solid content of 25%, a particle size of 46 nm and viscosity of 9.5 cps is obtained.

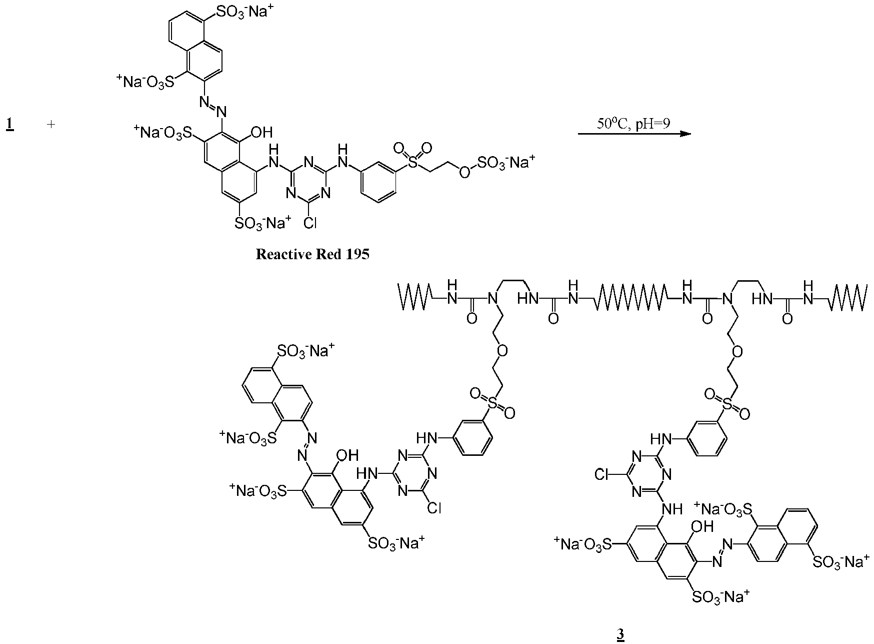

In addition, the above polyurethane 1 with hydroxyl side group is reacted with the vinyl sulfone group of reactive dye (reactive blue 250) to form a new covalent bond at 65°C and pH = 9 so as to obtain the dyestuff polyurethane 4 as shown below. The dyestuff polyurethane 4 is diluted by appropriate amount of acetone and then added by an emulsion solution at high-speed stirring. After 60 minutes of stirring, acetone is removed through a process of reduced pressure distillation, and an aqueous emulsion of the yellow dyestuff polyurethane with a solid content of 23.5%, a particle size of 90 nm and viscosity of 14.5 cps is obtained.

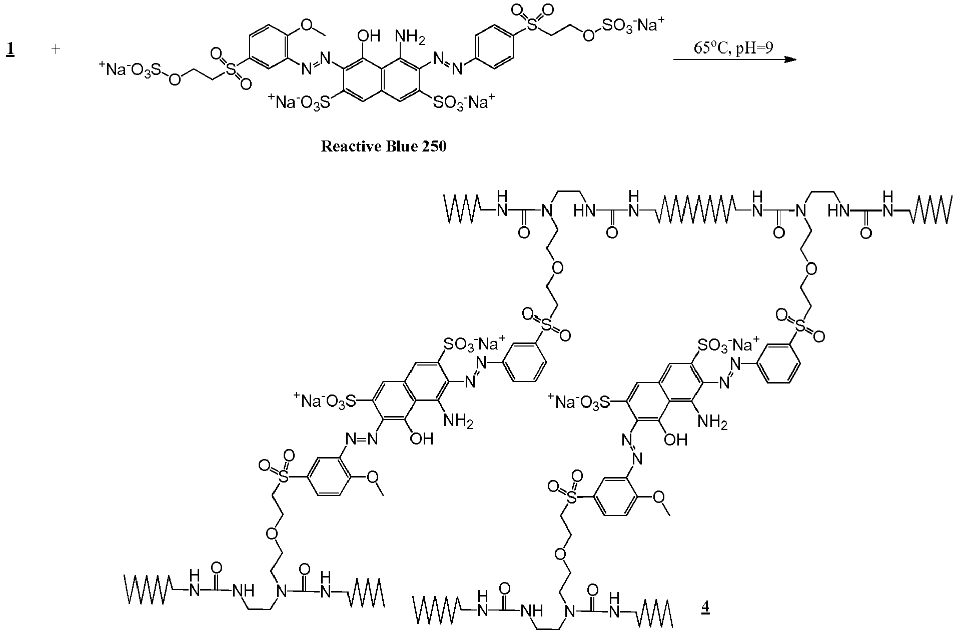

The above polyurethane 1 with hydroxyl side group is reacted with the vinyl sulfone group of reactive dye (reactive black 5) to form a new covalent bond at 65°C and pH = 9 so as to obtain the dyestuff polyurethane 5 as shown below. The dyestuff polyurethane 5 is diluted by appropriate amount of acetone and then added by an emulsion solution at high-speed stirring. After 60 minutes of stirring, acetone is removed through a process of reduced pressure distillation, and an aqueous emulsion of the black dyestuff polyurethane with a solid content of 25%, a particle size of 60 nm and viscosity of 15 cps is obtained.

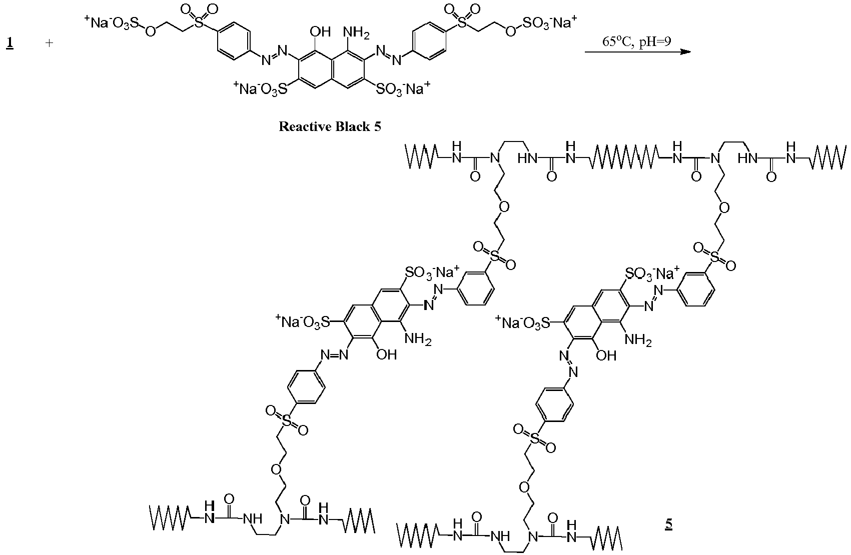

The following describes the process of manufacturing the inkjet ink.

Example 1: Polyvinylpyrrolidone and EDTA are dissolved in de-ionized water and well stirred for 30 minutes. The aqueous organic solvent is added and the mixture is stirred at room temperature for 15 minutes. At room temperature, polyurethane thickener (Anfong TW-710), polysiloxane surfactant (BYK-378), acetylene glycol surfactant (Surfynol 465) and triethanolamine are added according to Table 1-1, 1-2, 1-3 as below, and the mixture is stirred in high shear emulsification machine at 600 rpm for 30 minutes. The mixture is added by aqueous dye polyurethane dispersant, stirred for 1 hour, and finally filtered by a filter with a mesh of 0.8 µm to obtain various aqueous dye polymer inkjet inks as shown in Table 1-1, 1-2, 1-3.

**Table 1-1**

| Raw material | Sample 1 | Sample 2 | Sample 3 | Sample 4 | Sample 5 |
|---|---|---|---|---|---|
| Dispersant of aqueous black polyurethane dye 5 | 20 | 20 | 20 | 20 | 20 |
| alcohol | 20 | - | - | - | - |
| diethylene glycol | - | 20 | - | - | - |
| 1,2-propanediol | - | - | 20 | 20 | 20 |
| 1,2-hexanediol | - | - | - | - | - |
| glycerol | 5 | 5 | 5 | 5 | 5 |
| sorbitol | - | - | - | 2 | 2 |
| ethylene glycol butyl ether | 10 | 10 | - | - | - |
| diethylene glycol butyl ether | - | - | 10 | 8 | - |
| propylene glycol methyl ether | - | - | - | - | 8 |
| Poly vinylpyrrolidone | 0.5 | 0.5 | 0.5 | 0.5 | 0.5 |
| BYK-378 | 0.1 | 0.1 | 0.1 | 0.1 | 0.1 |
| EDTA | 0.1 | 0.1 | 0.1 | 0.1 | 0.1 |
| triethanolamine | 0.2 | 0.2 | 0.2 | 0.2 | 0.2 |
| De-ionized water | 44.1 | 44.1 | 44.1 | 44.1 | 44.1 |
| Viscosity (cps, 25°C) | 3.85 | 4.31 | 4.62 | 4.80 | 4.66 |
| Surface tension (dyne/cm) | 26.7 | 26.9 | 26.9 | 27.2 | 27.0 |
| Particle size (D50, nm) | 65 | 66 | 62 | 60 | 60 |

**Table 1-2**

| Raw material | Sample 6 | Sample 7 | Sample 8 | Sample 9 | Sample 10 |
|---|---|---|---|---|---|
| Dispersant of aqueous black polyurethane dye 5 | 20 | 20 | 20 | 20 | - |
| Dispersant of aqueous yellow polyurethane dye 2 | - | - | - | - | 15 |
| alcohol | - | - | - | 10 | 10 |
| 1,2-propanediol | 20 | 20 | 15 | 15 | 15 |
| 1,2-hexanediol | - | 2 | 2 | - | 2 |
| glycerol | 5 | - | - 5 | 5 | 5 |
| sorbitol | 5 | 8 | 8 | 10 | 10 |
| propylene glycol methyl ether | - | 5 | - | - | - |
| dipropylene glycol methyl ether | 5 | - | - | - | - |
| pyrrolidone | - | - | 5 | - | 5 |
| dimethyl sulfoxide | - | - | - | 2 | - |
| Poly vinylpyrrolidone | 0.5 | 0.25 | - | - | - |
| polyurethane (Anfong TW-710) | - | 1 | 1 | 1 | 1 |
| BYK-378 | 0.1 | 0.1 | 0.02 | 0.02 | 0.02 |
| Surfynol 465 | - | - | 0.3 | 0.3 | 0.3 |
| EDTA | 0.1 | 0.1 | 0.1 | 0.1 | 0.1 |
| triethanolamine | 0.2 | 0.2 | 0.2 | 0.2 | 0.2 |
| De-ionized water | 44.1 | 43.35 | 43.38 | 36.38 | 36.38 |
| Viscosity (cps, 25°C) | 4.40 | 5.08 | 4.43 | 5.50 | 5.18 |
| Surface tension (dyne/cm) | 26.9 | 26.8 | 29.8 | 29.3 | 29.9 |
| Particle size (D50, nm) | 66 | 62 | 65 | 62 | 76 |

**Table 1-3**

| Raw material | Sample 11 | Sample 12 | Sample 13 | Sample 14 | Sample 15 |
|---|---|---|---|---|---|
| Dispersant of aqueous yellow polyurethane dye 2 | 15 | - | - | - | - |
| Dispersant of aqueous magenta polyurethane dye 3 | - | 20 | 20 | - | - |
| Dispersant of aqueous blue polyurethane dye 4 | - | - | - | 20 | 20 |
| diethylene glycol | - | - | - | - | - |
| 1,2-propanediol | 20 | 15 | 15 | 15 | 15 |
| 1,2-hexanediol | 2 | 2 | 2 | 2 | 2 |
| glycerol | 5 | 5 | 10 | 10 | 10 |
| sorbitol | 10 | 8 | 8 | 8 | 5 |
| diethylene glycol butyl ether | - | - | - | - | 3 |
| propylene glycol methyl ether | 5 | - | - | - | - |
| pyrrolidone | 5 | 5 | 5 | 5 | 5 |
| dimethyl sulfoxide | - | - | - | - | - |
| Poly vinylpyrrolidone | - | - | - | - | 0.25 |
| polyurethane (Anfong TW-710) | 1 | 1 | 1 | 1 | 1 |
| BYK-378 | 0.02 | 0.02 | 0.02 | 0.02 | 0.02 |
| Surfynol 465 | 0.3 | 0.3 | 0.3 | 0.3 | 0.3 |
| EDTA | 0.1 | 0.1 | 0.1 | 0.1 | 0.1 |
| triethanolamine | 0.2 | 0.2 | 0.2 | 0.2 | 0.2 |
| De-ionized water | 36.38 | 43.38 | 38.38 | 38.38 | 38.13 |
| Viscosity (cps, 25°C) | 5.02 | 4.41 | 4.80 | 4.48 | 4.98 |
| Surface tension (dyne/cm) | 30.8 | 31.2 | 30.7 | 30.13 | 30.5 |
| Particle size (D50, nm) | 75 | 50 | 48 | 90 | 89 |

The resultant inkjet ink composition is evaluated by the following test items 1 to 8.
For item 1, viscosity test is performed by a rotational viscometer Brookfield DV-E and controlled at 25°C.
For item 2, surface tension is tested by a surface tensiometer CBVP-A3 manufactured by KYOWA INTERFACE SCIENCE CO., LTD.
For item 3, ink's capability of cleaning is tested by EPSON DX-5 printerhead, Mutoh 1304 in the machine mode of cleaning, wherein each time the printerhead is cleaned, the printerhead inkjets one test bar up to 20 times until breaking holes occur. Grade A: no breaking hole and no oblique inkjet for all 20 times. Grade B: no breaking hole and no oblique inkjet within 10 to 20 times. Grade C: any breaking hole or oblique inkjet within 10 times.
For item 4, ink's capability of anti-drying printerhead is tested by EPSON DX-5 printerhead, Mutoh 1304. After the pattern of inkjet is 10m long, check the nozzle, move away the printerhead without stopping the system (without triggering the cleaning function), trigger the printerhead to inkjet after 30 minutes or 1 hour, and examine the flowing state of the ink to determine whether the printerhead is clogged or oblique inkjet occurs. Grade A: no breaking hole and no oblique inkjet within 1 hour. Grade B: no breaking hole and no oblique inkjet within 30 minutes. Grade C: any breaking hole or oblique inkjet within 30 minutes.
For item 5, ink's stability for inkjet is tested by EPSON DX-5 printerhead, Mutoh 1304. After the pattern of inkjet on a paper roll is 80m long, determine whether any breaking hole, oblique inkjet or ink flying occurs. Grade A: no ink flying and no or slight oblique inkjet within 5 breaking holes during the 80m test. Grade B: no ink flying and middle oblique inkjet within 10 breaking holes during the 80m test. Grade C: ink flying or serious oblique inkjet within 10 breaking holes during the 80m test.
For item 6, performance of inkjet pattern is tested by observing the inkjet pattern. Grade A: no bleeding and clear pattern. Grade B: somewhat bleeding at heavy ink region and fine pattern. Grade C: serious bleeding and poor pattern.
For item 7, test of high temperature stability is performed by pouring the ink into a mouth bottle, keeping the ink standstill at 45°C for 8 weeks, and analyzing its viscosity and particle size after cooling down to room temperature. Grade A: variation of ink's viscosity and particle size less than 5%. Grade B: variation of ink's viscosity and particle size less than 10%. Grade C: variation of ink's viscosity and particle size larger than 10%.
For item 8, test of low temperature stability is performed by pouring the ink into a mouth bottle, keeping the ink standstill at -10°C for 8 weeks, and analyzing its viscosity and particle size after warming up to room temperature. Grade A: variation of ink's viscosity and particle size less than 5%. Grade B: variation of ink's viscosity and particle size less than 10%. Grade C: variation of ink's viscosity and particle size larger than 10%.

For the evaluation test of the aqueous dye polymer inkjet ink such as ink's capability of cleaning, ink's stability for inkjet, ink's capability of anti-drying printerhead, performance of inkjet pattern, ink's thermal stability and test of low temperature stability, the test result is listed in Table 2-1, 2-2, 2-3.

**Table 2-1**

| Raw material | Sample 1 | Sample 2 | Sample 3 | Sample 4 | Sample 5 |
|---|---|---|---|---|---|
| Test of capability of cleaning | C | B | B | B | B |
| Test of capability of anti-drying printerhead | C | B | B | B | B |
| Test of stability for inkjet | C | A | B | A | B |
| Test of performance of inkjet pattern | B | B | A | A | A |
| Test of high temperature stability | B | A | B | A | A |
| Test of low temperature stability | B | B | B | B | B |

**Table 2-2**

| Raw material | Sample 6 | Sample 7 | Sample 8 | Sample 9 | Sample 10 |
|---|---|---|---|---|---|
| Test of capability of cleaning | B | B | A | A | A |
| Test of capability of anti-drying printerhead | B | A | A | A | A |
| Test of stability for inkjet | A | A | A | A | A |
| Test of performance of inkjet pattern | A | A | A | A | B |
| Test of high temperature stability | A | A | A | B | A |
| Test of low temperature stability | B | A | A | B | A |

**Table 2-3**

| Raw material | Sample 11 | Sample 12 | Sample 13 | Sample 14 | Sample 15 |
|---|---|---|---|---|---|
| Test of capability of cleaning | A | A | A | A | A |
| Test of capability of anti-drying printerhead | A | A | A | A | A |
| Test of stability for inkjet | A | A | A | A | A |
| Test of performance of inkjet pattern | A | B | A | B | A |
| Test of high temperature stability | A | A | A | A | A |
| Test of low temperature stability | A | A | A | A | A |

From Table 2-1, 2-2, 2-3, the samples of the aqueous inkjet ink of the present invention fully meet all the evaluation items. The test sample 1 is added by alcohol with low boiling point such that the printerhead dries too fast, performance of cleaning the printerhead is poor and the length of inkjet is not sufficient. Such problems are slightly improved after adding glycol ether solvent with high boiling point, as shown by the samples 2-7. As for the samples 8-15, after pyrrolidone solvent and surfynol 465 are added, the test of cleaning capability is performed, and each time the printerhead is cleaned, the printerhead inkjets one test bar up to 20 times without any breaking hole or oblique inkjet. During the 80m inkjet test, it results in no breaking hole, less than 5 oblique inkjet holes and no ink flying. In addition, after the printerhead is removed from the ink socket, the nozzle is not clogged by the printerhead and no oblique inkjet occurs after 1 hour. Further, adding the polyurethane thicker improves low temperature stability of the inkjet ink, as shown by the samples 7-15. When the dye based polymeric dispersant of the aqueous inkjet ink composition changes color, it needs to appropriately adjust the kind and the amount of the aqueous organic solvent so as to achieve the optimal exhibition of the ink, just like the samples 10, 12 and 14 compared to the samples 11, 13 and 15, respectively.

Furthermore, the aqueous inkjet ink composition of the present invention is applicable to the inkjet field such as inkjet printer. Through the inkjet printer, the desired patterns are not only inkjet printed on the paper, but also directly on various textile materials and after the heating/drying process is performed on the patterns, excellent brightness and vividness is resulted in as the dye ink. Thus, the textile semi-finished products using the aqueous inkjet ink composition exhibit bright and vivid color patterns without any additional cleaning step such as soap cleaning or water cleaning. The present invention avoids a great deal of waste water, and the inkjet ink is applicable to most textile materials such as cloth of cotton, linen, silk, wool, polyester, nylon and rayon. Particularly, the inkjet ink of the present invention possesses the features of excellent storage stability at high and low temperature, not easily clogging the printerhead and strong capability of cleaning.

Although the present invention has been described with reference to the preferred embodiments thereof, it is apparent to those skilled in the art that a variety of modifications and changes may be made without departing from the scope of the present invention which is intended to be defined by the appended claims.

## Claims

1. An aqueous inkjet ink composition, comprising:
a dye based polymeric dispersant present in an amount of from 2 to 30 percent by weight of the total weight of the aqueous inkjet ink composition, comprising at least one dye polymer and an emulsifier, the at least one dye polymer present in an amount of from 1 to 20 percent by weight of the total weight of the aqueous inkjet ink composition, the at least one dye polymer having a particle size (D50) less than 100 nm;
an aqueous organic solvent present in an amount of from 15 to 65 percent by weight of the total weight of the aqueous inkjet ink composition, comprising at least one of monool solvent, diol solvent, glycerol solvent, erythritol solvent, pentitol solvent, mannitol solvent, glycol sugar solvent, glycol ether solvent, pyrrolidone solvent and sulfoxide solvent;
at least one additive present in an amount less than 2 percent by weight of the total weight of the aqueous inkjet ink composition, comprising at least one of fungicide, thickener, surfactant, antifoam, pH conditioning agent and chelating agent; and
water for dissolving or dispersing the dye based polymeric dispersant, the aqueous organic solvent and the at least one additive ,
wherein the aqueous inkjet ink composition possesses viscosity in a range from 2 to 20 cps at 25°C, and surface tension in a range from 28 to 40 dyne/cm.

2. The inkjet ink composition as claimed in claim 1, wherein the dye polymer comprises at least one of polyurethane, polyimide, epoxy resin, polyester, acrylic, phenolic, polyether and melamine.

3. The inkjet ink composition as claimed in claim 2, wherein the dye polymer formed of polyurethane is obtained by a process of copolymerization of a reactive dye, isocyanate and a diol or polyol in a specific order of addition specified by a chemical reaction equation below, 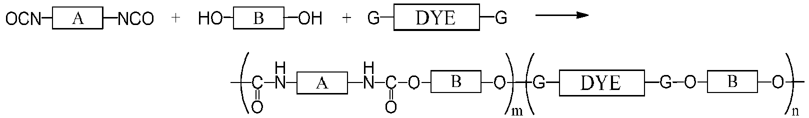 , where 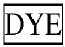 is chromophore group for the reactive dye, each of 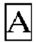 and 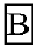 is alkyl group or aryl group, and G is vinyl sulfone group or chlorotriazine group.

4. The inkjet ink composition as claimed in claim 2, wherein the dye polymer formed of polyimide is obtained through an addition reaction of a dye with hydroxyl group or a reactive dye containing amino group, and a pre-polymer or oligomer containing diisocyanate specified by a chemical reaction equation as below, 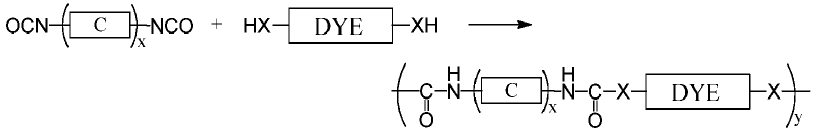 , wherein 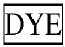 is chromophore group, 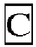 is a repeat unit of diisocyanate pre-polymer, and X is O (oxygen) or NH(nitro-hydrogen group).

5. The inkjet ink composition as claimed in claim 2, wherein the dye polymer formed of epoxy resin is obtained through a reaction process of a dye with hydroxyl group (OH) or a reactive dye containing amino group (NH2), and a pre-polymer or oligomer of epoxy resin specified by a chemical reaction equation as below, 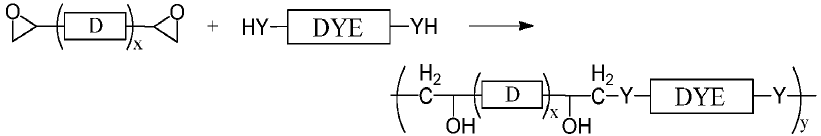 , wherein 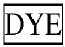 is chromophore group, 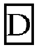 is a repeat unit of pre-polymer of epoxy resin, and Y is O (oxygen) or NH (nitro-hydrogen group).

6. The inkjet ink composition as claimed in claim 2, wherein the dye polymer formed of polyimide is obtained through a reaction of copolymerization of a reactive dye, di-acid and di-amine specified by a chemical reaction equation as below, 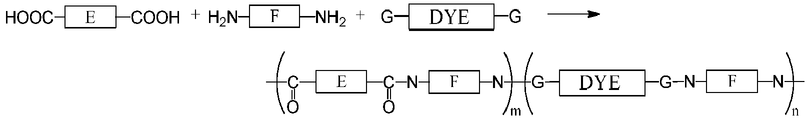 , wherein 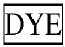 is chromophore group, each of 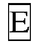 and 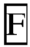 is alkyl group or aryl group, and G is vinyl sulfone group or chlorotriazine group.

7. The inkjet ink composition as claimed in claim 2, wherein the dye polymer formed of polyester is obtained through a reaction of copolymerization of a reactive dye, di-acid and diol specified by a chemical reaction equation as below, 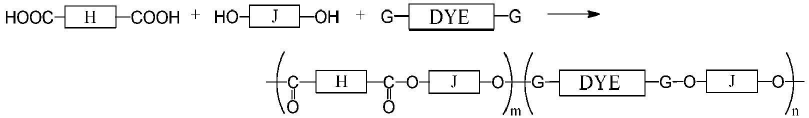 , wherein 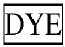 is chromophore group, each of 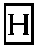 and 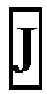 is alkyl group or aryl group, and G is vinyl sulfone group or chlorotriazine group.

8. The inkjet ink composition as claimed in claim 2, wherein the dye polymer formed of polyester is obtained through an addition reaction of a dye containing hydroxyl group or amino group, and pre-polymer or oligomer containing di-acid specified by a chemical reaction equation as below, 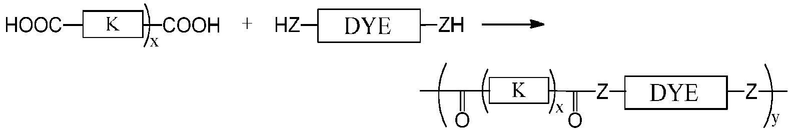 , wherein 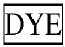 is chromophore group, 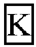 is a repeat unit of pre-polymer of di-acid, and Z is O (oxygen) or NH (nitro-hydrogen group).

9. The inkjet ink composition as claimed in claim 2, wherein the dye polymer formed of acrylic is obtained by first synthesizing a reactive dye having vinyl-based chromophore through diazotization, and then copolymerization with acrylic specified by a chemical reaction equation as below, 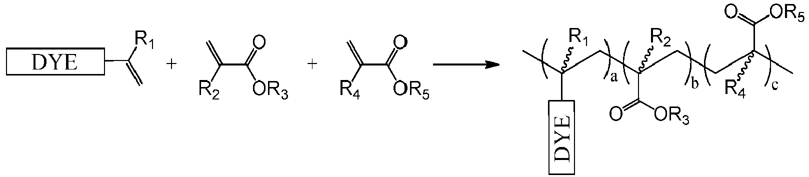 , wherein 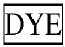 is chromophore group, and each of R1-R5 is hydrogen (H) or alkyl group.

10. The inkjet ink composition as claimed in claim 2, wherein the dye polymer is obtained through a free radical polymerization of a dye containing vinyl group and monomer or oligomer containing vinyl group specified by a chemical reaction equation as below, 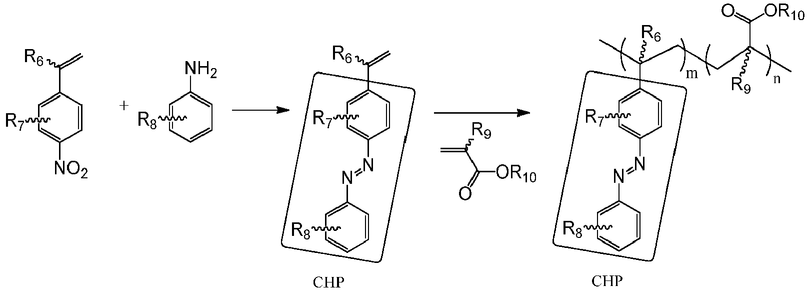 , wherein each of R6, R9 and R10 is hydrogen (H) or alkyl group, each of R7 and R8 is hydrogen (H), alkyl group or alkyl derivative, and CHP is chromophore group.
